Europäisches Patentamt

European Patent Office

Office européen des brevets

(11) Veröffentlichungsnummer : **0 225 325**
**B1**

(12) **EUROPÄISCHE PATENTSCHRIFT**

(45) Veröffentlichungstag der Patentschrift :
**17.08.88**

(21) Anmeldenummer : **85904580.9**

(22) Anmeldetag : **26.09.85**

(86) Internationale Anmeldenummer :
**PCT/AT 85/00035**

(87) Internationale Veröffentlichungsnummer :
**WO/8602321 (24.04.86 Gazette 86/09)**

(51) Int. Cl.⁴ : **B 60 B 39/06**, B 60 B 39/10

(54) SPLITTSTREUEINRICHTUNG FÜR KRAFTFAHRZEUGE.

(30) Priorität : **09.10.84 AT 3189/84**

(43) Veröffentlichungstag der Anmeldung :
**16.06.87 Patentblatt 87/25**

(45) Bekanntmachung des Hinweises auf die Patenterteilung : **17.08.88 Patentblatt 88/33**

(84) Benannte Vertragsstaaten :
**AT BE CH DE FR GB IT LI LU NL SE**

(56) Entgegenhaltungen :
**EP-A- 0 149 417**
**BE-A-   375 985**
**BE-A-   557 568**
**US-A- 2 574 287**

(73) Patentinhaber : **CERVINKA, Franz**
**Oberleitenweg 35**
**A-6370 Kitzbühel (AT)**

(72) Erfinder : **CERVINKA, Franz**
**Oberleitenweg 35**
**A-6370 Kitzbühel (AT)**

(74) Vertreter : **Torggler, Paul, Dr. et al**
**Wilhelm-Greil-Strasse 16**
**A-6020 Innsbruck (AT)**

Jouve, 18, rue St-Denis, 75001 Paris, France

## Beschreibung

Die Erfindung betrifft eine Splittstreueinrichtung für Kraftfahrzeuge, mit einem Streusplittbehälter, mit einem zu einem Fahrzeugrad führenden Streukanal, der eine Fördereinrichtung aufweist, wobei in einem ersten Abschnitt des Streukanals als Fördereinrichtung ein umlaufendes Förderband angeordnet ist, das mit Querstegen versehen ist, und dessen Abgabeende oberhalb eines einen Auslauf umfassenden zweiten Abschnittes des Streukanals liegt. Eine derartige Einrichtung ist z. B. in der EP-A-149 417 (veröffentlicht am 24.07.85) beschrieben und gilt somit als Stand der Technik nach Art. 54 (3) EPÜ.

Es sind bereits verschiedene Arten von Streueinrichtungen bekannt geworden, die im Bedarfsfall, insbesondere bei plötzlich auftretender Glätte betätigt werden, um Sand oder Splitt unmittelbar vor die Räder des Fahrzeuges zu befördern. Dabei ist in der EP-A-149 417 (Fig. 7 bis 10) auch vorgeschlagen worden, für den Transport des Streugutes vom Vorratsbehälter zur Streustelle geriffelte Förderbänder einzusetzen, die das Streugut am Ende durch den Auslauf abgeben. Der auf dem Endabschnitt des geriffelten Förderbandes liegende Splitt wird durch die Erschütterungen und die auftretenden Kräfte weitgehend ausgestreut, sodaß die unmittelbare Einsatzbereitschaft nicht gewährleistet ist. Die DE-A-30 45 546 zeigt eine Förderschnecke im Streukanal und die AT-B-349 328 beschreibt eine Rüttelrinne für den Quertransport ; die Förderung durch Schwerkraft aus einem verschließbaren Behälter und die Anwendung von Luft bzw. Auspuffgasen ist ebenfalls bereits vorgeschlagen worden.

Insgesamt können alle vorbeschriebenen bzw. bekannten Vorschläge das Problem der Streuung für Kraftfahrzeuge auf Grund des Verschleißes, der Verklemmungsgefahr, der Fahrzeugvibrationen, der Erschütterungen durch den Straßenzustand sowie der Seitenkräfte bei Kurvenfahrten nicht zufriedenstellend lösen, da das Transportsystem ständig wechselnden Bedingungen ausgesetzt bzw. von vornherein schlecht geeignet ist. Mit Streugut direkt belastete Klappen sind durch mögliche Verstopfungen bzw. Brückenbildungen funktionsunsicher, wobei zusätzlich noch bei deren Anordnung am Kanalauslauf die Gefahr des Festfrierens des Sandes bzw. Splittes besteht.

Die Erfindung hat es sich nun zur Aufgabe gestellt, eine Lösung zu finden, die wesentlich besser die Funktion der Streueinrichtung im Bedarfsfall sicherstellt.

Erfindungsgemäß wird dies dadurch erreicht, daß das Förderband mit den Querstegen und mittels zusätzlicher Seitenstege in einzelne Kammern unterteilt ist, und daß der Antrieb des Förderbandes mit einer Nachlaufsteuerung versehen ist, die den Antrieb nach der Betätigung des Ausschalters erst dann stillsetzt, wenn ein Quersteg des Förderbandes in das obere Umlenkviertel der am Abgabeende angeordneten Förderbandtrommel eintritt, wobei der Auslauf, vorzugsweise durch eine Klappe, verschließbar ist.

Die horizontale Förderdistanz ist dabei belanglos, da bei Inbetriebnahme des vom offenen Behälterauslaß ausgehenden Förderbandes kontinuierlich Splitt gefördert wird. Es ist somit einerseits möglich, Splitt aus jeder für die Unterbringung des Splittbehälters geeigneten Position im Kraftfahrzeug vor das Rad zu bringen. Andererseits kann die horizontale Förderdistanz auch so kurz sein, daß das Förderband im wesentlichen nur mehr eine Verengung des Behälterauslasses auf den Querschnitt des zweiten Streukanalabschnittes bildet. Am Abgabeende fällt der Splitt frei durch den nach unten führenden zweiten Abschnitt des Streukanals, dessen vorzugsweise vorgesehene Bodenklappe beim Einschalten des Förderbandes geöffnet wird. Durch die Nachlaufsteuerung bleibt beim Abschalten des Förderbandes dieses so stehen, daß sich ein Quersteg zumindest in einer Vertikalebene der abgabeseitigen Förderbandtrommel befindet bzw. gerade in deren oberes Umlenkviertel eingetreten ist, und beim Wiedereinschalten die dem Abgabeende nächste Kammer unmittelbar entleert wird. Jener Quersteg des Förderbandes verhindert dadurch eine vorzeitige Entleerung der Kammer über die Abgabeseite und weitere Querstege im oberen Transportabschnitt einen Rückfuß des Streusplitts in Richtung des Streusplittbehälters auf Grund von Erschütterungen des Fahrzeuges. Vorzugsweise wird ein Förderband verwendet, das im Querschnitt U-förmig mit längenveränderlichen Seitenstegen ausgebildet ist, die vorzugsweise aus einem dehnbaren Material bestehen, und vom freien Längsrand sich erstreckende, etwa die halbe Höhe der Seitenstege umfassende Einschnitte aufweisen. Dadurch wird einerseits die Seitenführung des Splittes bis zur Abgabe in den nach unten führenden Streukanalabschnitt sichergestellt, und andererseits aber auch eine Materialschonung der Seitenstege des Förderbandes erreicht.

Die Nachlaufsteuerung wird dabei in bevorzugter Ausführung von einem Fühler geregelt, der in die Umlaufbahn der Querstege ragt. Dieser Fühler kann an sich an jeder Stelle angebracht sein, an der seine Beaufschlagung nach Betätigung des Ausschalters das Förderband so stillsetzt, daß der letzte Quersteg des oberen Transportabschnittes im oberen Umlenkviertel der am Abgabeende angeordneten Förderbandtrommel anhält.

Bevorzugt ist der Fühler im Bereich der aufgabeseitigen Förderbandtrommel angeordnet, wobei sein Abstand zu Beginn des oberen Umlenkviertels der abgabeseitigen Förderbandtrommel ein ganzzahliges Vielfaches des Abstandes zweier Querstege ist und beispielsweise vom Deckel des ersten Streukanalabschnittes nach unten ragt. Die Beaufschlagung des Fühlers durch einen Quersteg nach der Betätigung des Ausschalters kann bei Vorhandensein einer Bodenklappe am Auslauf des zweiten Abschnittes gleichzeitig, vorzugsweise mit zeitlich geringer Verzögerung, einen Antrieb für den Verschluß der Bodenklappe einschalten, sodaß diese erst verschlossen wird, wenn der nach unten führende Abschnitt des Streukanals geleert ist, wodurch die Ablagerung von Splitt auf der Klappe und deren Verklemmung vermieden und die Abdichtung des Auslaufes sichergestellt wird.

Eine weitere bevorzugte Ausführung sieht vor, daß bei stillstehendem Förderband sich ein Quersteg zwischen dem aufgabeseitigen Ende des oberen Transportabschnittes und dem Behälterauslaß erstreckt, wodurch ein Rückfluß des aus dem Behälterauslaß frei austretenden Splittes zur aufgabeseitigen Förderbandtrommel auf Grund von Fahrvibrationen oder Seitenkräften verhindert wird. Dies vermeidet eine teilweise Entleerung des Behälters sowie eine Verstopfung des horizontalen Streukanalabschnittes.

Für den Antrieb des Förderbandes und der bevorzugt vorgeschlagenen Bodenklappe sind insbesondere zwei Elektromotoren vorgesehen, die von der elektrischen Anlage des Fahrzeuges versorgt werden. Selbstverständlich sind auch andere Antriebsmittel denkbar.

Die Erfindung wird nun anhand der Figuren der beiliegenden Zeichnungen näher beschrieben, ohne darauf beschränkt zu sein.

Die Fig. 1 zeigt einen Längsschnitt durch eine erfindungsgemäße Streueinrichtung,

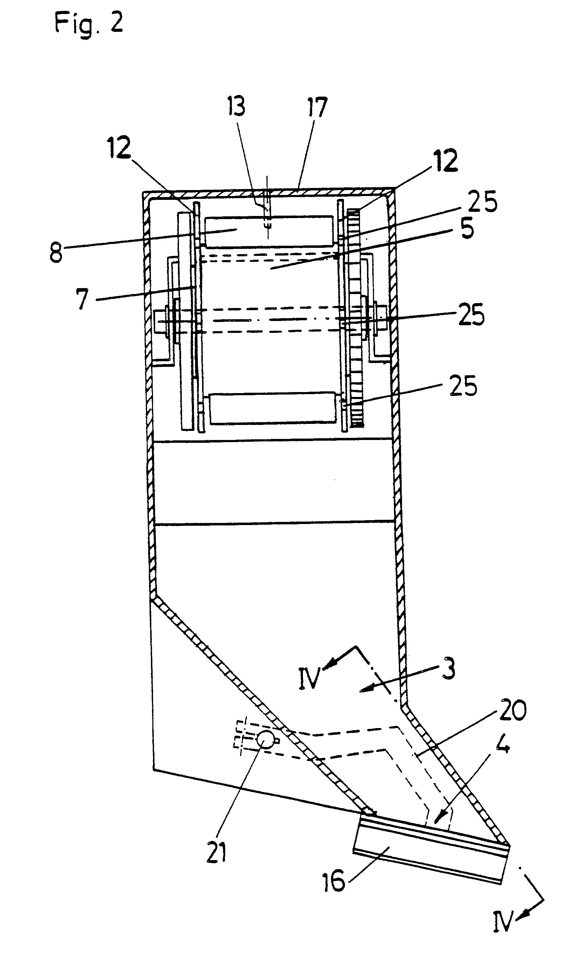

die Fig. 2 einen Schnitt nach der Linie II-II in Fig. 1,

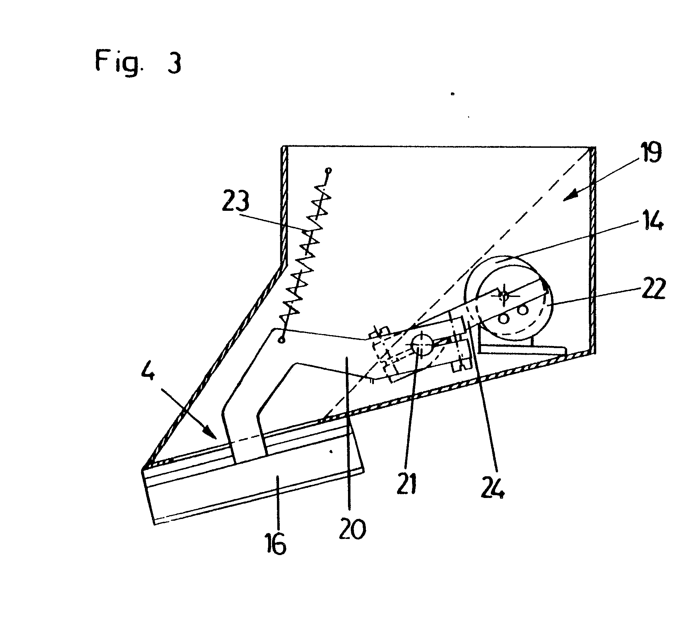

die Fig. 3 einen Schnitt nach der Linie III-III in Fig. 1,

Fig. 4 einen Schnitt nach der Linie IV-IV in Fig. 3 durch eine weitere Ausführung, und

Fig. 5 einen Längsschnitt durch ein zweites Ausführungsbeispiel ähnlich Fig. 2.

Die erfindungsgemäße, in nicht näher dargestellter Weise an einem Kraftfahrzeug, insbesondere an einem PKW anbringbare Splittstreueinrichtung weist einen Streusplittbehälter 1 mit einem trichterförmigen Behälterauslaß 18 auf. Der Behälterauslaß 18 erstreckt sich durch eine Abdeckung 17 in den ersten Abschnitt 2 eines zwei Abschnitte 2, 3 aufweisenden, geschlossenen Streukanals. Der Streukanal führt zu dem mit Streusplitt zu versorgenden Fahrzeugrad und weist einen durch eine nach unten schwenkbare Bodenklappe 16 verschließbaren Auslaß 4 auf, die gegebenenfalls mit einer elektrischen Heizeinrichtung versehen ist, um das Anfrieren an das Auslaßgehäuse zu unterbinden. Im ersten horizontal verlaufenden Abschnitt 2 des Streukanals ist als Querfördermittel für den Streusplitt ein Förderband 5 angeordnet, das um eine aufgabeseitige Förderbandtrommel 6 und eine abgabeseitige Förderbandtrommel 7 geführt ist. Das Förderband 5 ist durch einen Elektromotor 10, der über die elektrische Anlage des Kraftfahrzeuges betreibbar ist, bewegbar, wobei ein dem Motor 10 vorgesetztes Getriebe die abgabeseitige Förderbandtrommel 7 treibt. Das Förderband 5 ist im Querschnitt U-förmig ausgeführt und in bestimmten Abständen mit Querstegen 8 bestückt. Die Seitenstege 12 des Förderbandes 5, die im Umlenkbereich längenveränderbar sein müssen, können beispielsweise gewellt sein. Eine andere Möglichkeit ist in der Zeichnung dargestellt, wonach die Seitenstege 12 aus dehnbarem Material bestehen, und Einschnitte 25 aufweisen, die sich vorzugsweise über die halbe Höhe der Seitenstege erstrecken. Der obere Transportabschnitt des Förderbandes 5 gleitet auf einer Stützplatte 11. Das obere Umlenkviertel der abgabeseitigen Förderbandtrommel 7 ist mit A bezeichnet, wobei der im Umlenkviertel A abgegebene Streusplitt frei in den im wesentlichen vertikal oder stark geneigt nach unten führenden Abschnitt 3 des Streukanals fällt. Das Gehäuse des Abschnittes 3 umfaßt dabei noch einen zweiten Raum 19, in dem der Betätigungsmechanismus für die den Auslaß 4 verschließende Bodenklappe 16 untergebracht ist. Die nach unten schwenkbare Bodenklappe 16 ist an Hebeln 20 angeordnet, die am Ende des Streukanals um die Achse 21 schwenkbar sind. Einer der beiden Hebel 20 ist zweiarmig ausgebildet, wobei sein zweiter Hebelarm 24 mit einer Nocke 22 zusammenwirkt, die von einem Elektromotor 14 antreibbar ist. Für die Rückführung der Bodenklappe in die Ausgangsstellung sorgt eine Rückstellfeder 23, wobei an deren Stelle auch eine Zwangsführung durch die Nocke 22 treten könnte.

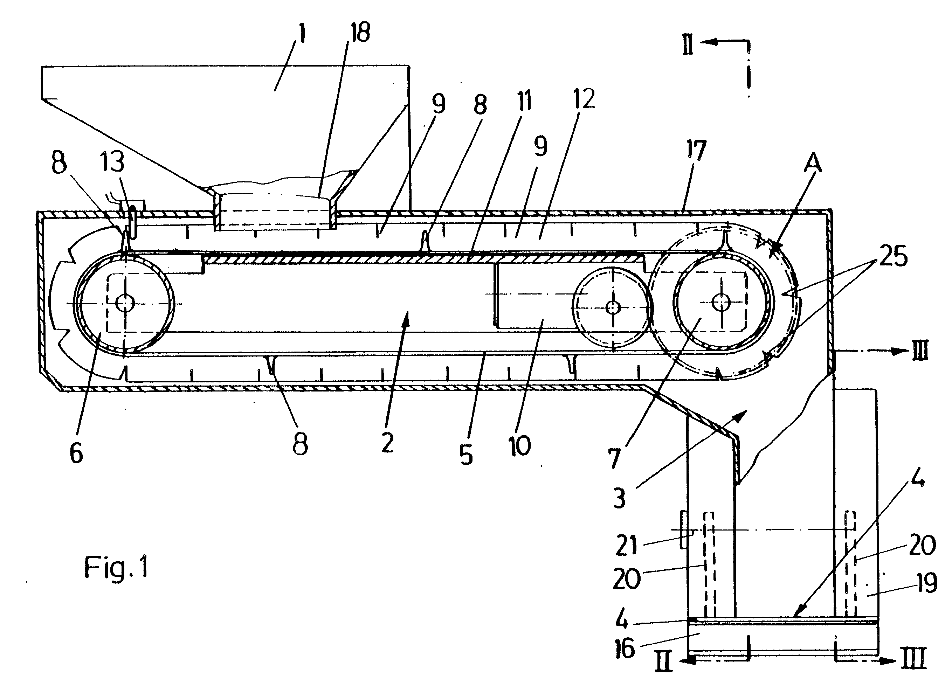

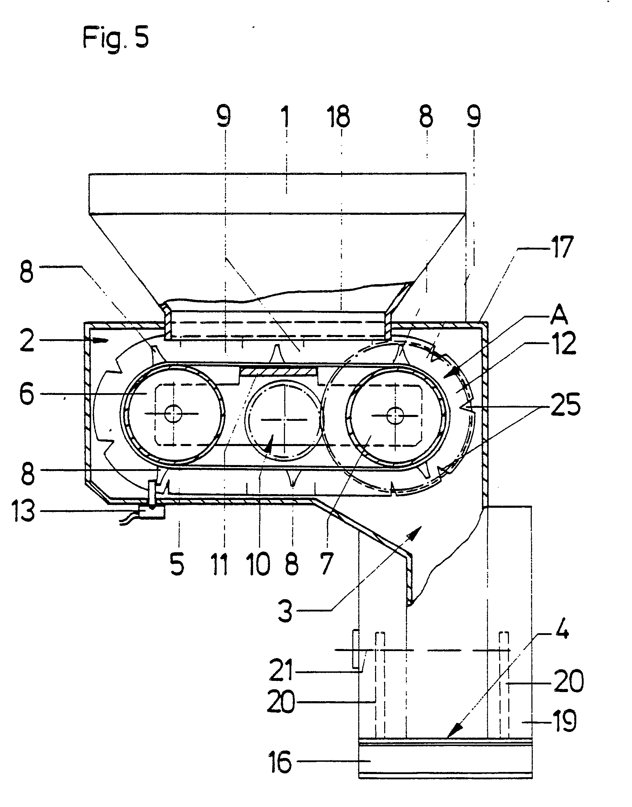

Die Funktion der Splittstreueinrichtung ist nun wie folgt : durch einen beispielsweise am Armaturenbrett vorgesehenen Schalter werden gleichzeitig beide Elektromotoren 10, 14 in Drehung versetzt, wobei über die Nocke 22 die Bodenklappe 16 geöffnet und damit der Auslaß 4 des Streukanals freigegeben wird. Der aus dem Streusplittbehälter 1 auf das Förderband nachfließende Streusplitt wird vom Förderband 5 bzw. den Querstegen 8 mitgenommen und fällt an der Abgabeseite frei in den nach unten führenden Abschnitt 3 des Streukanals durch den geöffneten Auslaß 4 zum Fahrzeugrad. Dabei stellt die Ausbildung einzelner Kammern 9 durch die Querstege 8 des Förderbandes 5 sicher, daß über die gesamte Förderlänge trotz Erschütterungen und Fliehkräften verteilte Splittmengen einsatzbereit zur Verfügung stehen, sodaß das Einschalten des Förderbandantriebes auch eine unmittelbare Streusplittabgabe am Abgabeende bewirkt. Wird kein weiterer Streusplitt benötigt, so wird der Schalter am Armaturenbrett wiederum betätigt. Dabei wird durch eine Nachlaufsteuerung sichergestellt, daß der Antriebsmotor 10 des Förderbandes 5 dieses solange weiterbewegt, bis ein Quersteg 8 in das obere Umlenkviertel A eintritt, wodurch einerseits der in der letzten Kammer 9 enthaltene Splitt entleert wird, und andererseits bei der Wiederbenützung der in der nächsten Kammer 9 enthaltene Splitt unmittelbar entleert werden kann. Um den Zeitpunkt des Stillstandes zu bestimmen, ist ein mit einem Schalter gekoppelter Fühler 13 vorgesehen, der sich gemäß Fig. 1 vor dem Behälterauslaß 18 und gemäß Fig. 5 an der Unterseite des ersten Abschnitts 2 des Streukanals, jeweils im Bereich der aufgabeseitigen Förderbandtrommel 6, in die Umlaufbahn der Querstege 8 erstreckt. Die Schaltung ist dabei so ausgebildet, daß der dem von jedem Quersteg 8 verdrängten Fühler 13 zugeordnete Schalter erst nach Betätigung des Schalters am Armaturenbrett den Stromkreis des Elektromotors unterbricht. Dabei ist es auch belanglos, ob hiezu elektrische oder elektronische Bauteile Verwendung finden. Die Beaufschlagung des Fühlers 13 nach der Betätigung des Armaturenbrettschalters setzt gleichzeitig oder geringfügig zeitlich verzögert auch den Elektromotor 14 in Tätigkeit, der über die Nocke 22 wieder die Rückführung der Bodenklappe 16 in die Schließstellung in die Wege leitet. Da der Schließvorgang der Bodenklappe 16 erst etwa 2 Sekunden nach Stillstand des Förderbandes 5 beginnt, ist der aus der letzten Kammer 9 im Umlenkbereich abgegebene Splitt durch den noch offenen Auslaß 4 gestreut worden, sodaß nach dem Verschließen der Bodenklappe 16 kein Splitt auf der Bodenklappe liegt und der nach unten führende Abschnitt 3 des Streukanals völlig entleert ist.

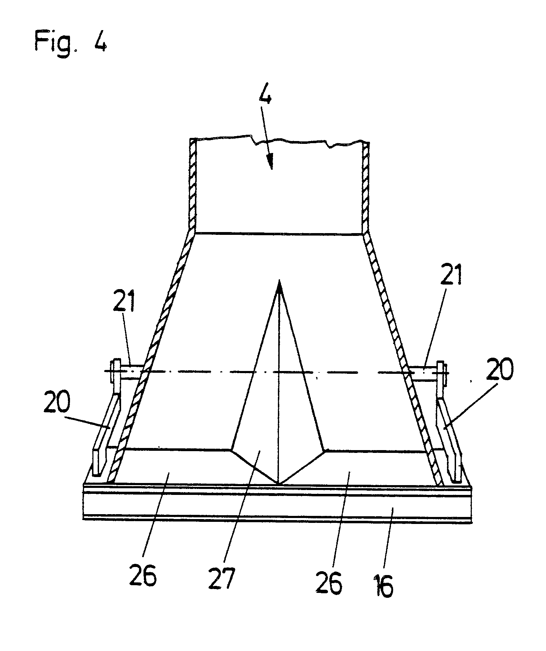

In Fig. 4 ist der Bereich des Auslasses 4 in einer für Zwillingsräder geeigneten Ausführung dargestellt, bei der alle übrigen Bestandteile unverändert sind. Der wiederum durch eine Bodenklappe 16 verschlossene Auslaß 4 ist auf eine mit den Zwillingsrädern korrespondierende Breite erweitert. Um dabei eine optimale Nutzung des aus Kosten- und Gewichtsgründen nur in beschränkten Mengen mitgeführten Streugutes zu erreichen, ist der verbreiterte Auslaß 4 in zwei Teilauslässe 26 gegabelt, sodaß zwischen den Zwillingsrädern ein nicht bestreuter Streifen verbleibt. Die Gabelung wird durch ein Trenn- bzw. Leitelement 27 erzielt, das aus der Grundfläche des Streukanals auf etwa die halbe Höhe ansteigt. Dabei hat es sich als günstig erwiesen, die beiden Flanken des Leitelementes 27 zueinander rechtwinkelig anzuordnen.

In der in Fig. 5 gezeigten Variante dient das Förderband 5 nur zur Dosierung der benötigten Streusplittmenge. Der Behälterauslaß 18 muß, um eine Brückenbildung des Splitts zu unterbinden, einen größeren Durchtrittsquerschnitt aufweisen als dem Bedarf an Streusplitt entspricht, da sonst der Splittverbrauch unnötig hoch würde. Das Förderband dient in diesem Fall als blockierfreie Drossel des Behälterauslasses 18, und der horizontale Abschnitt 2 des Streukanals weist nur jene zur Aufnahme des Förderbandes 5 erforderliche Mindestlänge auf.

**Patentansprüche**

1. Splittstreueinrichtung für Kraftfahrzeuge, mit einem Streusplittbehälter (1), mit einem zu einem Fahrzeugrad führenden Streukanal, der eine Fördereinrichtung aufweist, wobei in einem ersten Abschnitt (2) des Streukanals als Fördereinrichtung ein umlaufendes Förderband (5) angeordnet ist, das mit Querstegen (8) versehen ist, und dessen Abgabeende oberhalb eines einen Auslauf (4) umfassenden zweiten Abschnittes (3) des Streukanals liegt, dadurch gekennzeichnet, daß das Förderband (5) mit den Querstegen (8) und mittels zusätzlicher Seitenstege (12) in einzelne Kammern (9) unterteilt ist, und daß der Antrieb (10) des Förderbandes (5) mit einer Nachlaufsteuerung versehen ist, die den Antrieb (10) nach der Betätigung des Ausschalters erst dann stillsetzt, wenn ein Quersteg (8) des Förderbandes (5) in das obere Umlenkviertel (A) der am Abgabeende angeordneten Förderbandtrommel (7) eintritt, wobei der Auslauf (4), vorzugsweise durch eine Klappe (16), verschließbar ist.

2. Splittstreueinrichtung nach Anspruch 1, dadurch gekennzeichnet, daß das Förderband (5) im Querschnitt U-förmig mit längenveränderlichen Seitenstegen (12) ausgebildet ist, die vorzugsweise aus einem dehnbaren Material bestehen, und vom freien Längsrand sich erstreckende, etwa die halbe Höhe der Seitenstege (12) umfassende Einschnitte (25) aufweisen.

3. Splittstreueinrichtung nach Anspruch 1, dadurch gekennzeichnet, daß in die Umlaufbahn der Querstege (8) ein Fühler (13) der Nachlaufsteuerung ragt.

4. Splittstreueinrichtung nach Anspruch 3, dadurch gekennzeichnet, daß der Fühler (13) im Bereich der aufgabeseitigen Förderbandtrommel (6) angeordnet ist, wobei sein Abstand zum Beginn des oberen Umlenkviertels (A) der abgabeseitigen Förderbandtrommel (7) ein ganzzahliges Vielfaches des Abstandes zwischen zwei Querstegen (8) ist.

5. Splittstreueinrichtung nach einem der Ansprüche 1 bis 4, dadurch gekennzeichnet, daß bei stillstehendem Förderband (5) sich ein Quersteg (8) zwischen dem aufgabeseitigen Ende des oberen Transportabschnittes und dem Behälterauslaß (18) erstreckt.

6. Splittstreueinrichtung nach einem der Ansprüche 1 bis 5, dadurch gekennzeichnet, daß die Nachlaufsteuerung beim Abschalten des Antriebsmotors (10) des Förderbandes (5) einen Antriebsmotor (14) einer Nockenscheibe (22) für den Verschluß der Bodenklappe (16) einschaltet.

**Claims**

1. A grit spreader for motor vehicles comprising a container (1) for the gritting material and a dispersion channel leading to a vehicle wheel and having a conveying installation, an endless conveyor (5) being disposed in a first section (2) of the dispersion channel as the conveying installation and provided with transverse webs (8), and its discharge end lying above a second section (3) of the dispersion channel comprising the outlet (4), characterized in that the conveyor (5) is by transverse webs (8) and additional lateral walls (12) divided into individual chambers, and that the drive unit (10) of the conveyor (5) is provided with a follow-up control which stops the drive unit (10) following actuation of a cutout switch only, when a transverse web (8) of the conveyor (5) enters the upper return section (A) of a conveyor pulley (7) disposed at the discharge end, the outlet (4) being closable preferably by means of a flap (16).

2. A grit spreader according to claim 1, characterized in that the conveyor (5) is U-shaped in cross-section with lateral walls (12) variable in length which are preferably made from expandable material and which have, extending from the outer longitudinal edge, slits (25) of approximately half the height of the lateral walls (12).

3. A grit spreader according to claim 1, characterized in that a sensor (13) of the follow-up control projects into the orbit of the transverse webs (8).

4. A grit spreader according to claim 3, characterized in that the sensor (13) is arranged in the region of the conveyor pulley (6) at the feed end, its distance to the start of the upper return section (A) of the conveyor pulley (7) at the discharge end being an integral multiple of the distance between two transverse webs (8).

5. A grit spreader according to one of claims 1 to 4, characterized in that, when the conveyor (5) is out of operation, a transverse web (8) extends between the feed end of the upper conveying section and the container outlet (18).

6. A grit spreader according to claims 1 to 5, characterized in that, when the drive unit (10) of the conveyor (5) is switched off, the follow-up control switches on a drive motor (14) of a cam disk (22) to close the bottom flap (16).

**Revendications**

1. Dispositif d'épandage de gravillons pour véhicules à moteurs, comprenant un réservoir de gravillons (1), un canal d'épandage menant à une roue du véhicule et présentant un dispositif de transport, le dispositif de transport étant constitué dans une première partie (2) du canal d'épandage par une bande transporteuse tournante (5) qui est munie de nervures transversales (8) et dont l'extrémité de décharge se trouve au-dessus d'une deuxième partie (3) du canal d'épandage comprenant une sortie (4), caractérisé en ce que la bande transporteuse (5) est divisée en différentes chambres (9) par les nervures transversales (8) et à l'aide de nervures latérales (12) supplémentaires et en ce que le dispositif d'entraînement (10) de la bande transporteuse (5) est muni d'une commande de poursuite qui n'arrête le dispositif d'entraînement (10) après l'actionnement du commutateur que lorsqu'une nervure transversale (8) de la bande transporteuse (5) entre dans le quart supérieur de déviation (A) du cylindre de bande transporteuse (7) disposé à l'extrémité de décharge, la sortie (4) pouvant être fermée, de préférence par un clapet (16).

2. Dispositif d'épandage de gravillons selon la revendication 1, caractérisé en ce que la bande transporteuse (5) présente une section transversale en U et des nervures latérales (12) qui peuvent être modifiées en longueur, sont constituées de préférence d'un matériau extensible et présentent des encoches (25) s'étendant à partir du bord longitudinal libre et comprenant environ la demi-hauteur des nervures latérales (12).

3. Dispositif d'épandage de gravillons selon la revendication 1, caractérisé en ce qu'un capteur (13) de la commande de poursuite fait saillie dans l'orbite des nervures transversales (8).

4. Dispositif d'épandage de gravillons selon la revendication 3, caractérisé en ce que le capteur (13) est disposé dans la zone du cylindre (6) côté alimentation, de la bande transporteuse, son écartement par rapport au début du quart supérieur de déviation (A) du cylindre (7) côté décharge, de la bande transporteuse, étant un multiple entier de l'écartement entre deux nervures transversales (8).

5. Dispositif d'épandage de gravillons selon l'une des revendications 1 à 4, caractérisé en ce que lorsque la bande transporteuse (5) est au repos, une nervure transversale (8) s'étend entre l'extrémité côté alimentation de la partie supérieure de transport et la sortie (18) du réservoir.

6. Dispositif d'épandage de gravillons selon l'une des revendications 1 à 5, caractérisé en ce que lors de l'arrêt du moteur d'entraînement (10) de la bande transporteuse (5), la commande de poursuite met en marche un moteur d'entraînement (14) d'un disque à cames (22) pour la fermeture du clapet de fond (16).

Fig.1

0 225 325

Fig. 2

Fig. 3

0 225 325

Fig. 4

# Fig. 5